Europäisches Patentamt

European Patent Office

Office européen des brevets

(11) Numéro de publication: **0 152 348**
**B1**

(12) **FASCICULE DE BREVET EUROPEEN**

(45) Date de publication du fascicule du brevet:
**14.06.89**

(21) Numéro de dépôt: **85400196.3**

(22) Date de dépôt: **06.02.85**

(51) Int. Cl.⁴: **G 01 G 19/10, B 60 P 5/00**

(54) **Dispositif de pesage pour semi-remorque routière.**

(30) Priorité: **13.02.84 FR 8402162**

(43) Date de publication de la demande:
**21.08.85 Bulletin 85/34**

(45) Mention de la délivrance du brevet:
**14.06.89 Bulletin 89/24**

(84) Etats contractants désignés:
**BE DE GB IT NL SE**

(56) Documents cités:
**FR-A- 2 400 447**
**FR-A- 2 521 929**

(73) Titulaire: **SOCIETE EUROPEENNE DE PROPULSION (S.E.P.) Société Anonyme dite:, 24 Rue Salomon de Rothschild, F-92150 Suresnes (FR)**

(72) Inventeur: **Bellec, Gérard, 3 rue George Sand, F-33160 St Medard en Jalles (FR)**

(74) Mandataire: **Thévenet, Jean-Bruno et al, Cabinet BEAU DE LOMENIE 55 rue d'Amsterdam, F-75008 Paris (FR)**

ACTORUM AG

## Description

La présente invention a pour objet un dispositif de pesage pour semi-remorque routière assurant, à l'arrêt du véhicule, la mesure de la charge de la remorque au niveau de son point d'attelage au tracteur du véhicule.

Les systèmes de pesage pour semi-remorque associés au point d'attelage de la remorque présentent des inconvénients liés au vieillissement, à la surcharge lors des cahots sur la route ou à des risques d'instabilité par rapport au système d'articulation initial, du fait qu'ils sont en permanence soumis à des sollicitations, y compris lors des déplacements du véhicule.

La présente invention vise à remédier aux inconvénients précités et à permettre de mesurer avec précision et commodité, à l'arrêt, la charge d'un semi-remorque au niveau de son point d'attelage, grâce à un dispositif de mesure escamotable pendant les déplacements et en dehors des périodes de mesure, et donc susceptible de présenter une durée de vie importante.

Ce but est atteint grâce à un dispositif de pesage qui, conformément à l'invention, comprend des moyens de mise en contact d'au moins un patin avec la sellette solidaire du tracteur, des moyens de soulèvement du châssis de la remorque par rapport au tracteur pour soulever le pivot d'attelage d'une faible distance par rapport au support solidaire du tracteur, des moyens de détection de la position du patin par rapport à la sellette du tracteur, et au moins un vérin hydraulique relié audit patin et associé à un capteur de pression pour délivrer un signal représentatif de la charge exercée par la remorque sur la sellette, par l'intermédiaire dudit patin, lorsque le châssis de la remorque est soulevé d'une faible distance prédéterminée par rapport au support solidaire du tracteur.

De façon plus particulière, le patin est relié à un axe d'articulation central d'un levier dont un bras est relié à un point d'articulation fixe solidaire du bâti et l'autre bras est relié à un point d'articulation solidaire de la partie mobile d'un vérin moteur dont le corps est fixé au châssis de la remorque.

Selon une caractéristique particulière, lesdits moyens de détection de la position du patin comprennent un clapet intercalé sur le circuit d'alimentation en fluide hydraulique dudit vérin moteur.

Selon un premier mode de réalisation de l'invention, ledit vérin moteur est constitué par ledit vérin hydraulique relié audit patin et associé à un capteur de pression.

Selon un autre mode de réalisation de l'invention, ledit patin est solidaire de, ou confondu avec la partie inférieure d'un vérin hydraulique servant de cellule de pesage, dont la partie supérieure mobile par rapport à la partie inférieure est reliée à l'axe d'articulation central, et ledit capteur de pression est associé à ladite cellule de pesage qui est distincte dudit vérin moteur.

Dans ce cas, selon une caractéristique particulière, un détecteur de position est disposé entre le châssis et ledit axe d'articulation central pour délivrer un signal de commande de limitation de l'alimentation du vérin moteur en fluide hydraulique lorsque le patin reposant sur la sellette a soulevé le pivot d'attelage d'une faible distance prédéterminée par rapport au support du tracteur.

Avantageusement, le détecteur de position commande la limitation de l'alimentation du vérin moteur en fluide hydraulique lorsque le pivot d'attelage est soulevé d'une distance comprise entre environ 1 et 3 mm par rapport au support du tracteur.

Selon un autre aspect de l'invention, les vérins comprennent une partie mobile et une partie fixe reliées par une couronne souple en caoutchouc. Les parties mobile et fixe peuvent être métalliques ou composées de couches alternées d'élastomères et de supports en métal ou en matériau composite assemblées par collage.

Le dispositif de pesage peut par ailleurs comprendre deux chaînes de mesure indépendantes comprenant chacune un patin de contact, un levier, au moins un vérin hydraulique, un capteur de pression associé à l'un des vérins et un détecteur de position et les deux patins sont disposés côte à côte de manière à pouvoir venir porter simultanément sur la sellette du tracteur.

D'autres caractéristiques et avantages ressortiront de la description suivante de modes particuliers de réalisation de l'invention, en référence au dessin annexé, sur lequel:

— la figure 1 représente une vue schématique en élévation d'une semi-remorque équipée d'un dispositif de pesage selon l'invention,

— les figures 2 et 3 représentent, vus en coupe axiale, des exemples de vérins hydrauliques ou cellules de pesage utilisables dans le dispositif de pesage selon l'invention,

— la figure 4 représente, de façon schématique, une chaîne de pesage à un vérin hydraulique constituant un premier mode de réalisation d'un dispositif de pesage selon l'invention,

— la figure 5 représente, de façon schématique, une chaîne de pesage à deux vérins constituant un deuxième mode de réalisation possible du dispositif de pesage selon l'invention,

— les figures 6 et 7 représentent de façon schématique le positionnement par rapport à la sellette d'un tracteur, d'un dispositif de pesage respectivement à une chaîne de pesage et à deux chaînes de pesage.

— la figure 8 représente le schéma global d'un dispositif de pesage comprenant deux chaînes de pesage incorporant chacune un vérin hydraulique,

— la figure 9 représente le schéma global d'un dispositif de pesage comprenant deux chaînes de pesage incorporant chacune deux vérins, et,

— la figure 10 représente le schéma global d'un dispositif de pesage comprenant une chaîne de pesage incorporant deux vérins et un détecteur de position indépendant.

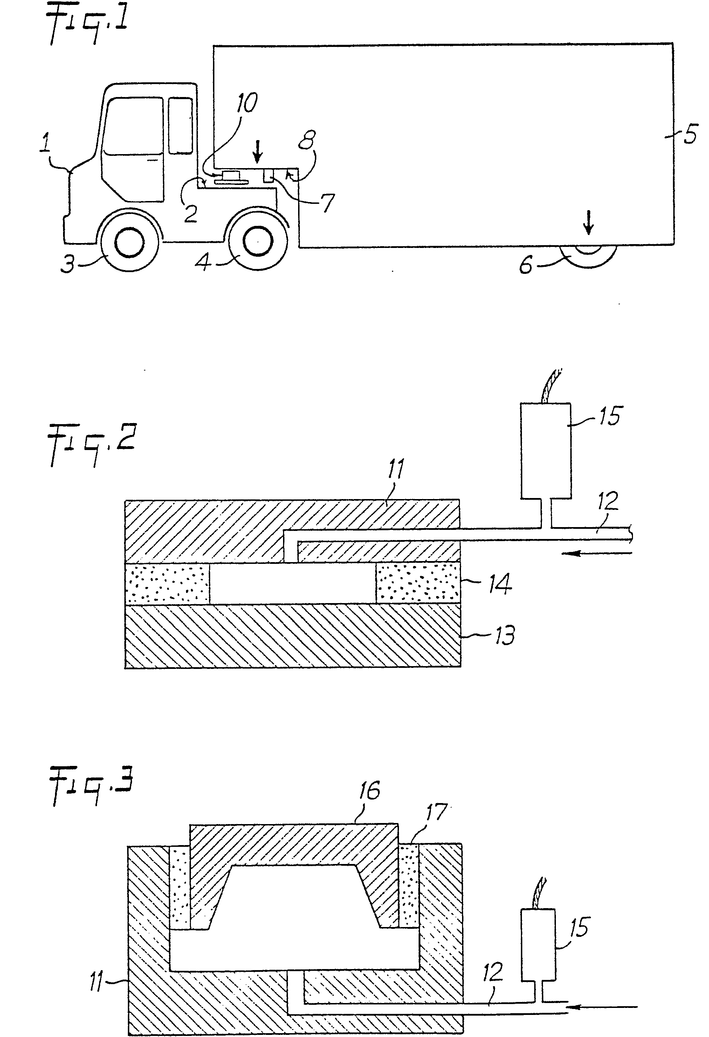

On voit sur la figure 1 une semi-remorque routière comprenant un tracteur 1 avec deux essieux 3, 4 et une plate-forme arrière 2 sur laquelle peut venir s'atteler une remorque 5 dont la charge est répartie entre l'essieu ou les essieux arrières 6 et le pivot d'attelage 7 situé sur la partie inférieure avant 8 de la remorque 5, qui vient s'encastrer sur la plate-forme arrière 2 du tracteur 1.

En position de transport, le pivot d'attelage 7 repose sur la plate-forme 2 du tracteur 1 de sorte que la charge de la remorque est alors répartie entre le ou les essieux arrières 6 de la remorque 5 et, par l'intermédiaire du pivot 7 et de la plate-forme 2, l'essieu arrière 4 du tracteur 1. Dans cette position de transport, le dispositif de pesage 10, représenté de façon symbolique sur la figure 1, est escamoté et n'est donc soumis à aucune sollicitation risquant de l'endommager.

A l'arrêt du véhicule, le dispositif de pesage 10, qui comprend au moins un vérin hydraulique et se trouve situé à proximité immédiate du pivot 7, entre la partie inférieure avant 8 de la remorque 5 et la plate-forme 2 du tracteur 1, est mis en service en provoquant un léger soulèvement du pivot d'attelage 7 par rapport à la plate-forme 2. La charge de la remorque 5 précédemment transmise par le pivot 7 est alors transmise à la sellette 20 par le dispositif de pesage 10 qui peut ainsi indiquer et enregistrer la charge de la remorque 5 d'une façon fiable et simple.

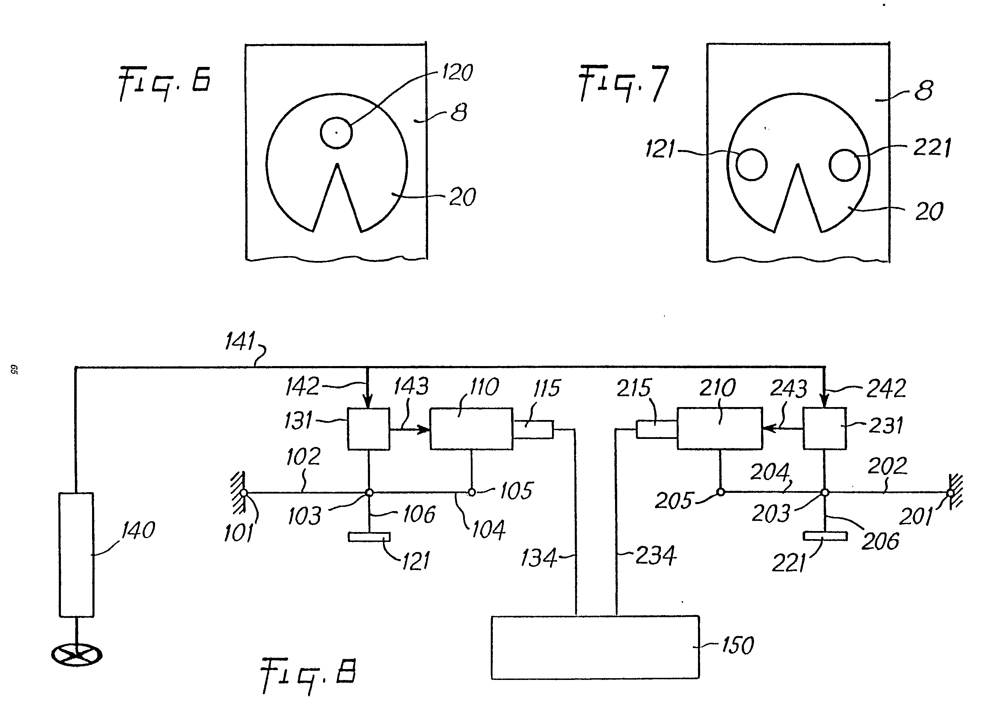

Les figures 4 et 5 permettent de mieux comprendre la structure du dispositif de pesage selon l'invention.

Dans le mode de réalisation de la figure 4, on voit un dispositif de pesage encore en position escamotée, le pivot d'attelage 7 de la remorque 5 reposant sur la plate-forme 2 du tracteur 1. Une sellette 20 montée sur la plate-forme 2 du tracteur fait face à une partie du châssis 8 solidaire du pivot d'attelage 7. Un patin 120 relié par des éléments élastiques au châssis 8 de la remorque 5 peut venir en contact avec la sellette 20 du tracteur au moment du pesage. Les déplacements du patin 120 sont commandés à partir d'un vérin moteur 110 par l'intermédiaire d'un levier 102, 104.

Le levier de liaison entre les différents éléments de la chaîne de pesage comprend essentiellement un axe d'articulation central 103, un premier bras 102 reliant l'articulation centrale 103 à une articulation 101 autour d'un point fixe solidaire du châssis 8, et un second bras 104 reliant l'articulation centrale 103 à une articulation 105 de liaison avec la tige solidaire de la partie mobile du vérin 110 dont le corps est fixé au châssis 8. Le patin 120 est lui-même relié à l'articulation centrale 103 par une tige 106. Un détecteur de position 131 permet de repérer le déplacement de l'axe d'articulation central 103 du levier, et donc le déplacement vertical du patin 120 relié à l'articulation centrale 103 par la tige 106.

Dans le mode de réalisation de la figure 4, le vérin hydraulique unique 110 sert à la fois d'organe moteur assurant le déplacement du patin 120, et par là-même le soulèvement du pivot d'attelage 7 d'une faible distance e, contrôlée par le détecteur de position 131, par rapport à la plate-forme 2, et d'organe de pesage, grâce à la mesure de la pression du fluide hydraulique du vérin 110 à l'aide d'un capteur de pression 115, une fois la position de fonctionnement du dispositif atteinte.

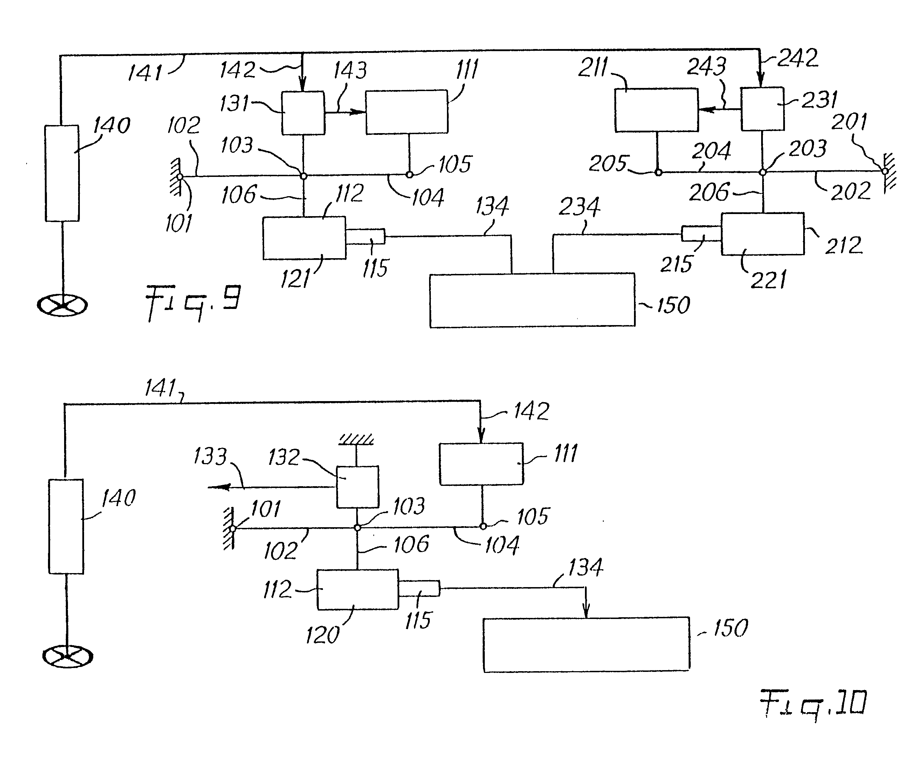

Le fonctionnement du dispositif de la figure 4 est le suivant. L'opérateur injecte une pression dans le vérin 110 à l'aide d'une pompe hydraulique 140 (voir figure 8). Dès que la pression injectée atteint une valeur prédéterminée suffisante, la remorque 5 est soulevée au niveau du pivot d'attelage 7 d'une faible valeur e, par exemple 1 mm, par l'intermédiaire du patin 120. Ce déplacement est détecté par le détecteur de position 131 qui est de préférence un clapet-détecteur de position qui limite la pression dans le vérin 110 et indique, par exemple par l'émission d'un signal électrique que la mesure est possible. Dans cette position de fonctionnement, la pression mesurée par le capteur de pression 115 associé au vérin 110 est une image de la force reprise par le patin 120, et par suite fournit une indication de la mesure de la charge de la remorque. Naturellement, ce mode de réalisation implique que les articulations 101, 103, 105 soient de bonne qualité. Toutefois, les perturbations éventuellement introduites par ces articulations peuvent aussi être prises en compte dans la mesure.

La figure 5 montre un second mode de réalisation de l'invention dans lequel les éléments communs au mode de réalisation de la figure 4 portent les mêmes références et ne seront pas décrits de nouveau. Dans ce second mode de réalisation, le vérin hydraulique 111 dont la partie mobile est reliée à l'articulation 105 ne joue qu'un rôle de vérin moteur provoquant le déplacement du patin 120 jusqu'à la position prédéterminée détectée par le capteur de position 131. En revanche, une véritable cellule de pesage 112 est associée à l'axe d'articulation central 103. Ainsi, le patin 120 est solidaire de, ou constitué par la face inférieure du corps d'un vérin de pesage 112 dont la partie mobile est reliée par la tige 106 à l'axe d'articulation central 103. Le capteur de pression 115 est dans ce cas associé au vérin de pesage 112 et non plus au vérin moteur 111.

Un avantage essentiel du mode de réalisation de la figure 5 réside dans le fait que la mesure de la pression dans la cellule de pesage 112, une fois le patin 120 mis en contact avec la sellette 20, et le pivot d'attelage relevé par rapport à la plate-forme 2, grâce au vérin moteur 111, est parfaitement indépendante de la géométrie du levier 102, 104 et des effets parasites lui afférent. La précision de pesage est totalement découplée des organes de liaison de la chaîne de pesage.

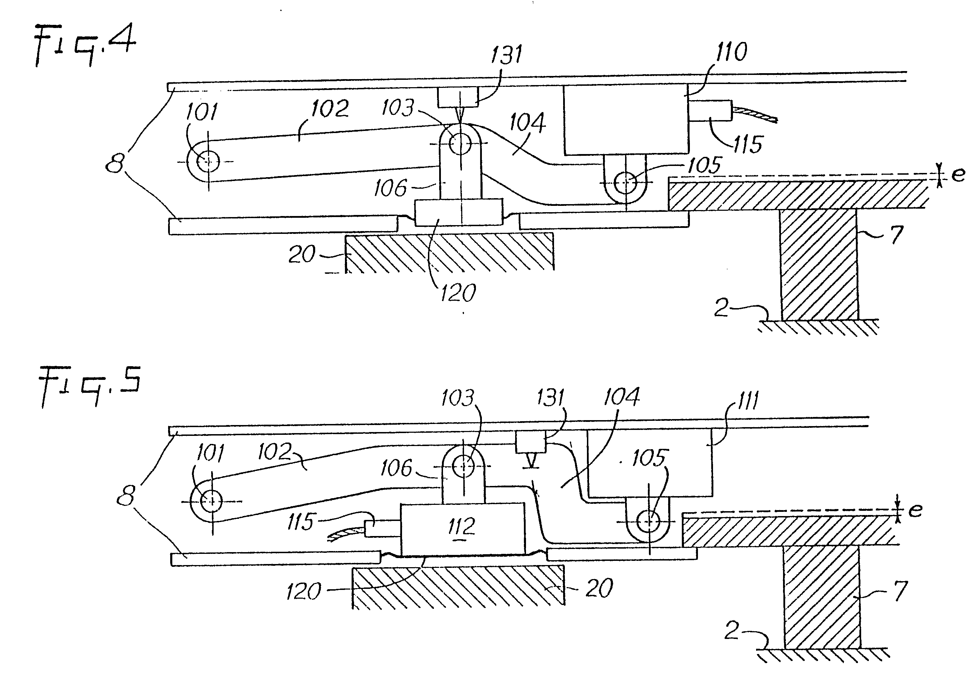

Comme cela a été expliqué ci-dessus, le dispositif de pesage selon l'invention implique l'utilisation de vérins hydrauliques, soit moteur (vérin 111), soit de pesage (vérin 112), soit combinant les deux fonctions en un seul organe (vérin 110). La pression mesurée par le détecteur de pression 115 associé au vérin 110 ou 112 est une image de l'effort repris par le patin 120 s'appuyant sur la sellette 20. Toutefois, un vérin hydraulique classique dont l'étanchéité est réalisée par un joint implique des frottements qui introduisent une erreur dans la relation effort/pression. La présence de joints peut entraîner en outre une usure et des fuites. Par suite, il est particulièrement avantageux d'utiliser des vérins tels que par exemple ceux qui sont représentés sur les figures 2 et 3, avec une partie de vérin fixe 11 et une partie mobile 13, respectivement 16, reliées par une couronne souple 14, respectivement 17 en caoutchouc et réalisées en métal ou composées de couches alternées d'élastomères et de supports en métal ou en matériau composite assemblées par collage. Un tel type de structure s'avère adapté aussi bien à la réalisation du vérin à double fonction 110 que du vérin de pesage 112 ou du vérin moteur 111.

Le dispositif de pesage selon l'invention, qu'il comprenne un ou deux vérins associés à un patin, peut être constitué par une ou deux chaînes de mesure, selon les applications envisagées. Dans le cas de deux chaînes de mesure impliquant la présence de deux patins 121, 221, l'ensemble est plus stable pendant le temps de la mesure et il est possible de tenir compte d'un défaut de planéité entre la plate-forme 2 du tracteur et la remorque 5.

La figure 6 montre un exemple de localisation d'un patin unique 120 par rapport à la sellette 20 du tracteur 1 tandis que la figure 7 montre un exemple de localisation de deux patins 121, 221 appartenant à deux chaînes de mesure différentes, par rapport à la sellette 20.

La figure 10 montre un dispositif de pesage composé d'une chaîne unique de mesure à deux vérins 111, 112, mais dans laquelle le détecteur de position 132 n'est pas constitué par un clapet, mais par un simple détecteur de position donnant par la ligne 133 une information sur le déplacement du patin 120, laquelle information permet de limiter sur la ligne 141, 142 reliant la pompe hydraulique 140 au vérin moteur 111, l'alimentation en fluide de pression. Le capteur de pression 115 associé au vérin de pesage 112 dont le corps forme le patin 120, délivre un signal de mesure par la ligne 134 reliée à une unité 150 de traitement permettant l'affichage d'une mesure de la charge de la remorque.

La figure 8 montre un dispositif de pesage comprenant deux chaînes complètes de pesage associées chacune à un patin 121, respectivement 221 et comprenant chacune un vérin unique 110, respectivement 210. Dans la première chaîne de pesage, le clapet-détecteur de position 131 est interposé entre les lignes 142, 143 d'alimentation du vérin 110 à partir de la ligne générale 141 d'alimentation en fluide hydraulique à partir de la pompe 140. La deuxième chaîne de pesage comprend des éléments référencés 201 à 206, 210, 215, 221, 231, 234, 242 et 243 qui correspondent respectivement aux éléments 101 à 106, 110, 115, 121, 131, 134, 142 et 143 de la première chaîne de pesage, et présentent la même structure. La charge de la remorque 5 est alors évaluée par l'unité de traitement 150 à partir des signaux fournis à la fois par les lignes 134 et 234 associées aux patins 121 et 221.

La figure 9 représente un dispositif de pesage à double chaîne de pesage analogue au dispositif de la figure 8, mais dans lequel chaque chaîne de pesage comprend deux vérins distincts 111, 112 respectivement 211, 212 au lieu d'un vérin unique 110, 210. Les autres éléments sont analogues dans les figures 8 et 9.

**Revendications**

1. Dispositif de pesage pour semi-remorque routière assurant, à l'arrêt du véhicule, la mesure de la charge de la remorque (5) au niveau de son point d'attelage (7) au tracteur (1) du véhicule, caractérisé en ce qu'il comprend des moyens de mise en contact d'au moins un patin (120, 121, 221) avec la sellette (20) solidaire du tracteur (1), des moyens de soulèvement du châssis (8) de la remorque (5) par rapport au tracteur (1) pour soulever le pivot d'attelage (7) d'une faible distance par rapport au support (2) solidaire du tracteur (1), des moyens (131, 132, 231) de détection de la position du patin (120, 121, 221) par rapport à la sellette (20) du tracteur, et au moins un vérin hydraulique (110, 210, 112, 212) relié audit patin (120, 121, 221) et associé à un capteur de pression (115, 215) pour délivrer un signal représentatif de la charge exercée par la remorque (5) sur la sellette (20), par l'intermédiaire dudit patin (120, 121, 221), lorsque le châssis (8) de la remorque (5) est soulevé d'une faible distance prédéterminée par rapport au support (2) solidaire du tracteur (1).

2. Dispositif de pesage selon la revendication 1, caractérisé en ce que le patin (120, 121, 221) est relié à un axe d'articulation central (103, 203) d'un levier dont un bras (102, 202) est relié à un point d'articulation fixe (101, 201) solidaire du bâti et l'autre bras (103, 204) est relié à un point d'articulation (105, 205) solidaire de la partie mobile d'un vérin moteur (110, 210, 111, 211) dont le corps est fixé au châssis (8) de la remorque (5).

3. Dispositif de pesage selon la revendication 2, caractérisé en ce que lesdits moyens (131, 231) de détection de la position du patin (120, 121, 221) comprennent un clapet intercalé sur le circuit (141, 142, 143; 241, 242, 243) d'alimentation en fluide hydraulique dudit vérin moteur (110, 210, 111, 211).

4. Dispositif de pesage selon la revendication 2, caractérisé en ce que ledit vérin moteur (110, 210) est constitué par ledit vérin hydraulique (110, 210) relié audit patin (120, 121, 221) et associé à un capteur de pression (115, 215).

5. Dispositif de pesage selon la revendication 2 ou la revendication 3, caractérisé en ce que ledit patin (120, 121, 221) est solidaire de, ou confondu avec la partie inférieure d'un vérin hydraulique servant de cellule de pesage (112, 212), dont la partie supérieure (106, 206) mobile par rapport à la partie inférieure est reliée à l'axe d'articulation central (103, 203), et en ce que ledit capteur de pression (115, 215) est associé à ladite cellule de pesage (112, 212) qui est distincte dudit vérin moteur (111, 211).

6. Dispositif de pesage selon la revendication 5, caractérisé en ce qu'un détecteur de position (132) est disposé entre le châssis (8) et ledit axe d'articulation central (103) pour délivrer un signal de commande de limitation de l'alimentation du vérin moteur (111) en fluide hydraulique lorsque le patin (120) reposant sur la sellette (20) a soulevé le pivot d'attelage d'une faible distance prédéterminée par rapport au support (2) du tracteur (1).

7. Dispositif de pesage selon la revendication 3 ou la revendication 6, caractérisé en ce que le détecteur de position (131, 132, 231) commande la limitation de l'alimentation du vérin moteur (110, 210, 111, 211) en fluide hydraulique lorsque le pivot d'attelage (7) est soulevé d'une distance comprise entre environ 1 et 3 mm par rapport au support (2) du tracteur (1).

8. Dispositif de pesage selon l'une quelconque des revendications 1 à 7, caractérisé en ce que les vérins (110, 210, 111, 211, 112, 212) comprennent une partie mobile (13, 16) et une partie fixe (11), reliées par une couronne souple (14, 17) en caoutchouc.

9. Dispositif de pesage selon l'une quelconque des revendications 1 à 8, caractérisé en ce que les vérins (110, 210, 111, 211, 112, 212) comprennent une partie mobile (13, 16) et une partie fixe (11) composées de couches alternées d'élastomères et supports en métal ou en matériau composite assemblées par collage.

10. Dispositif de pesage selon l'une quelconque des revendications 1 à 9, caractérisé en ce qu'il comprend deux chaînes de mesure indépendantes comprenant chacune un patin de contact (121; 221), un levier (102, 104; 202, 204), au moins un vérin hydraulique (110, 111, 112; 210, 211, 212), un capteur de pression (115; 215) associé à l'un des vérins (110, 112; 210, 212) et un détecteur de position (131; 231) et en ce que les deux patins (121; 221) sont disposés côte à côte de manière à pouvoir venir porter simultanément sur la sellette (20) du tracteur (1).

## Claims

1. Weighing apparatus for road trailers determining, when the vehicle is stopped, the load of the trailer (5) at the position of its coupling (7) to the tractor (1) of the vehicle, characterised in that it comprises means to place in contact at least one bearing pad (120, 121, 221) with the fifth wheel (20) fixed in the tractor (1), means to raise the chassis (8) of the trailer (5) with respect to the tractor (1) for raising the coupling pin (7) by a small amount with respect to the platform (2) of the tractor (1), means (131, 132, 231) for detecting the position of the bearing pad (120, 121, 221) with respect to the fifth wheel (20) of the tractor, and at least one hydraulic jack (110, 210, 112, 212) connected to the said bearing pad (120, 121, 221) and associated with a pressure sensor (115, 215) outputting a signal representative of the load exerted by the trailer (5) on the fifth wheel (20), through the said bearing pad (120, 121, 221), when the chassis (8) of the trailer (5) is raised a small predetermined amount with respect to the platform (2) of the tractor (1).

2. Weighing apparatus according to claim 1, characterised in that the bearing pad (120, 121, 221) is connected to a central pivot axis (103, 203) of a lever having one arm (102, 202) and connected to a fixed pivot point (101, 201) in the framework and the other arm (104, 204) connected to a pivot point (105, 205) fixed in the movable part of a power jack (110, 210, 111, 211) having its main body fixed in the chassis (8) of the trailer (5).

3. Weighing apparatus according to claim 2, characterised in that the said means (131, 231) for detecting the position of the baring pad (120, 121, 221) comprise a valve inserted in the hydraulic fluid supply circuit (141, 142, 143; 241, 242, 243) of the said power jack (110, 210, 111, 211).

4. Weighing apparatus according to claim 2, characterised in that the said power jack (110, 210) comprises the said hydraulic jack (110, 210) connected to the said bearing (120, 121, 221) and associated with a pressure sensor (115, 215).

5. Weighing apparatus according to claim 2 or claim 3, characterised in that the said bearing pad (120, 121, 221) is rigidly connected to or integral with the lower part of a hydraulic jack serving as a load cell (112, 212), of which the upper part (106, 206) is movable with respect to the lower part and is connected to the central articulation axle (103, 203), and in that the said pressure sensor (115, 215) is associated with the said load cell (112, 212) which is distinct from the said power jack (111, 211).

6. Weighing apparatus according to claim 5, characterised in that a position detector (132) is disposed between the chassis (8) and the said central articulation axle (103) providing a command signal for limiting the supply of hydraulic fluid to the power jack (111) when the bearing pad (120) rests on the fifth wheel (20) to raise the coupling pin a small predetermined amount with respect to the platform (2) of the tractor (1).

7. Weighing apparatus according to claim 3 or claim 6, characterised in that the position detector (131, 132, 231) controls the limitation of the supply of hydraulic fluid to the power jack (110, 210, 111, 211) when the coupling pin (7) is raised by between 1 and 3 mm with respect to the platform (2) of the tractor (1).

8. Weighing apparatus according to any one of claims 1 to 7, characterised in that the jacks (110, 210, 111, 211, 112, 211) comprise a movable part (13, 16) and a fixed part (11), connected by a flexible rubber annulus (14, 17).

9. Weighing apparatus according to any one of claims 1 to 8, characterised in that the jacks (110, 210, 111, 211, 112, 212) comprise a movable part (13, 16) and a fixed part (11) composed of alternate layers of elastomer and metal supports or a composite material adhesively secured together.

10. Weighing apparatus according to any one of claims 1 to 9, characterised in that it comprises two independent measuring systems each comprising a contact bearing pad (121, 221), a lever (102, 104; 202, 204), at least one hydraulic jack (110, 111, 112; 210, 211, 212), a pressure sensor (115; 215) associated with one of the jacks (110, 112; 210, 212) and a position detector (131; 231) and in that the two bearing pads (121; 221) are disposed side by side in such manner as to be able to be carried simultaneously on the fifth wheel (20) of the tractor (1).

## Patentansprüche

1. Wiegevorrichtung für Straßensattelschlepper, die bei Stillstand des Fahrzeugs die Messung der Last des Anhängers (5) auf der Höhe seines Ankupplungspunktes (7) zur Zugmaschine (1) des Fahrzeugs sicherstellt, dadurch gekennzeichnet, daß sie Einrichtungen zur Inkontaktbringung wenigstens einer Kufe (patin) (120, 121, 221) mit der Sattelkupplung (20), die mit der Zugmaschine (1) verbunden ist, Anhebeeinrichtungen des Chassis (8) des Anhängers (5) bezüglich der Zugmaschine (1), um den Sattelkupplungszapfen (7) um einen geringen Weg bezüglich des mit der Zugmaschine (1) verbundenen Lagers (2) anzuheben, Einrichtungen (131, 132, 231) zur Erfassung der Position der Kufe (120, 121, 221) bezüglich der Sattelkupplung (20) der Zugmaschine, und wenigstens einen hydraulischen Wagenheber oder Zylinder (110, 210, 112, 212) aufweist, der mit dem Zapfen (120, 121, 221) verbunden und einem Druckfühler (115, 215) zugeordnet ist, um ein Signal zu liefern, das der durch den Anhänger (5) auf die Sattelkupplung (20) über die Kufe (120, 121, 221) ausgeübten Last entspricht, wenn das Chassis (8) des Anhängers (5) um einen geringen Weg angehogen wird, der bezüglich des Lagers (2), das mit der Zugmaschine (1) verbunden ist, vorbestimmt ist.

2. Wiegevorrichtung nach Anspruch 1, dadurch gekennzeichnet, daß die Kufe (120, 121, 221) mit einer zentralen Drehachse (103, 203) eines Hebels verbunden ist, von dem ein Arm (102, 202) mit einem festen Drehpunkt (101, 201), der mit dem Aufbau verbunden ist, verbunden ist, und der andere Arm (104, 204) mit einem Drehpunkt (105, 205) verbunden ist, der mit dem bewegbaren Abschnitt eines Wagenhebers oder Zylinders (110, 210, 111, 211) verbunden ist, dessen Körper an dem Chassis (8) des Anhängers (5) befestigt ist.

3. Wiegevorrichtung nach Anspruch 2, dadurch gekennzeichnet, daß die Einrichtungen (131, 231) der Erfassung der Position der Kufe (120, 121, 221) ein Klappenventil aufweist, das in den Zuführkreis (141, 142, 143; 241, 242, 243) von hydraulischem Fluid des angetriebenen Wagenhebers (110, 210, 111, 211) zwischengeschaltet ist.

4. Wiegevorrichtung nach Anspruch 2, dadurch gekennzeichnet, daß der angetriebene Wagenheber oder Zylinder (110, 210) aus dem hydraulischen Zylinder (110, 210) gebildet ist, der mit der Kufe (120, 121, 221) verbunden ist und einem Druckfühler (110, 215) zugeordnet ist.

5. Wiegevorrichtung nach Anspruch 2 oder 3, dadurch gekennzeichnet, daß die Kufe (120, 121, 221) mit dem unteren Abschnitt eines Hydraulikzylinders verbunden oder einstückig mit diesem ausgebildet ist, der als Wiegezelle (112, 212) dient, deren oberer bezüglich des unteren Abschnittes beweglicher Abschnitt (106, 206) mit der zentralen Reachse (103, 203) verbunden ist, und daß der Druckfühler (115, 215) mit der Wiegezelle (112, 212) verbunden ist, die von dem angetriebenen Zylinder (111, 211) getrennt ist.

6. Wiegevorrichtung nach Anspruch 5, dadurch gekennzeichnet, daß ein Positionsdetektor (132) zwischen dem Chassis (8) und der zentralen Drehachse (103) angeordnet ist, um ein Betätigungssignal zur Begrenzung der Zufuhr des angetriebenen Zylinders (111) mit hydraulischem Fluid zu liefern, wenn die Kufe (120), die auf der Sattelkupplung (20) aufliegt, den Kupplungszapfen um einen vorbestimmten geringen Weg bezüglich des Lagers (2) der Zugmaschine (1) angehoben hat.

7. Wiegevorrichtung nach Anspruch 3 oder 6, dadurch gekennzeichnet, daß der Positionsdetektor (131, 132, 231) die Begrenzung der Zufuhr des angetriebenen Zylinders (110, 210, 111, 211) mit Hydraulikfluid steuert, wenn der Kupplungszapfen (7) um einen Weg angehoben ist, der zwischen 1 und 3 Millimeter bezüglich des Lagers (2) der Zugmaschine (1) angehoben ist.

8. Wiegevorrichtung nach einem der Ansprüche 1 bis 7, dadurch gekennzeichnet, daß die Zylinder (110, 210, 111, 211, 112, 212) einen bewegbaren Abschnitt (13, 16) und einen festen Abschnitt (11) aufweisen, die durch einen elastischen Kranz (14, 17) aus Kautschuk bzw. Gummi verbunden sind.

9. Wiegevorrichtung nach einem der Ansprüche 1 bis 8, dadurch gekennzeichnet, daß die Zylinder (110, 210, 111, 211, 112, 212) einen bewegbaren Abschnitt (13, 16) und einen festen Abschnitt (11) aufweisen, die aus alternierenden Elastomereschichten und Metallagerschichten oder aus einem Verbundmaterial gebildet sind, wobei sie durch Klebung verbunden sind.

10. Wiegevorrichtung nach einem der Ansprüche 1 bis 9, dadurch gekennzeichnet, daß sie zwei unabhängige Meßketten aufweist, die jede eine Kontaktkufe (121; 221), einen Hebel (102, 104; 202, 204), wenigstens einen hydraulischen Zylinder (110, 111, 112; 210, 211, 212), einen Druckfühler (115; 215), der mit einem der Zylinder (110, 112; 210, 212) verbunden ist, und einen Positionsdetektor (131; 231) aufweisen, und daß die beiden Kufen (121; 221) Seite an Seite derart angeordnet sind, um gleichzeitig auf den Kupplungszapfen (20) der Zugmaschine (11) in Andruck zu kommen.

**Fig.1**

**Fig.2**

**Fig.3**

Fig.4

Fig.5

Fig. 6

Fig. 7

Fig. 8

EP 0 152 348 B1

Fig.9

Fig.10